# EUROPÄISCHE PATENTSCHRIFT

(11) **EP 3 746 329 B1**
(45) Veröffentlichungstag und Bekanntmachung des Hinweises auf die Patenterteilung: **06.10.2021**
(21) Anmeldenummer: 19702832.7
(22) Anmeldetag: 24.01.2019
(51) Int. Cl.: B60N 2/00, B29C 44/12, B60N 2/64, B60N 2/70

(54) **SCHAUMTEIL EINES KRAFTFAHRZEUGSITZES MIT SITZBELEGUNGSERKENNUNG SOWIE VERFAHREN ZUR HERSTELLUNG EINES SOLCHEN**
FOAM PART OF A MOTOR VEHICLE SEAT HAVING SEAT OCCUPANCY DETECTION, AND METHOD FOR THE PRODUCTION THEREOF
PIÈCE EN MOUSSE D'UN SIÈGE DE VÉHICULE AUTOMOBILE AVEC DÉTECTION DE L'OCCUPATION DU SIÈGE ET PROCÉDÉ DE FABRICATION D'UNE TELLE PIÈCE

(30) Priorität: 30.01.2018 DE 102018201409
(43) Veröffentlichungstag der Anmeldung: 09.12.2020
(73) Patentinhaber: Audi AG, 85045 Ingolstadt (DE)
(72) Erfinder: BECKETT, Jürgen, 63776 Mömbris (DE)
(86) Internationale Anmeldenummer: PCT/EP2019/051685
(87) Internationale Veröffentlichungsnummer: WO 2019/149602

(56) Entgegenhaltungen:
- EP-A1- 1 634 516
- EP-A1- 1 712 403
- DE-U1-202017 005 093

## Beschreibung

Die Erfindung betrifft ein Schaumteil eines Kraftfahrzeugsitzes mit Sitzbelegungserkennung, ein Verfahren zur Herstellung eines solchen und einen Kraftfahrzeugsitz mit einem solchen Schaumteil.

### Stand der Technik

Im Zuge des Insassenschutzes werden mittlerweile eine Vielzahl von Sensoren im Fahrzeuginnenraum eines Kraftfahrzeugs verbaut. Ein Ziel dabei ist es das Verletzungsrisiko der Fahrzeuginsassen zu minimieren. Im Beifahrersitz und mittlerweile auch in den Sitzen der 2. und weiteren Sitzreihen werden Sitzbelegungserkennungs-Sensoren beispielsweise Drucksensoren eingesetzt, aus deren Signal Rückschlüsse auf die Belegung des Sitzes gezogen werden. Im Ansprechen auf einen durch das Gewicht eines Fahrzeuginsassen einwirkenden Druck wird ein druckempfindlicher Schalter betätigt. Sobald anhand des Signals des Sitzbelegungserkennungs-Sensors erkannt wird, dass eine Person auf dem Sitz sitzt, die den Sicherheitsgurt nicht angelegt hat, wird ein Warnhinweis ausgelöst. Hierbei ist ein wesentlicher Punkt, dass der Sitzbelegungserkennungs-Sensor in Bezug auf die Sitzfläche exakt positioniert und ausgerichtet ist, damit erst ab einer vorbestimmten Druckkraft ein Signal ausgelöst wird.

Aus der DE 20 2017 005 093 U1 ist ein Schaumteil gemäß dem Oberbegriff von Anspruch 1 bekannt.

Es ist Aufgabe der Erfindung ein Schaumteil eines Kraftfahrzeugsitzes mit Sitzbelegungserkennung derart weiterzubilden, dass ein Vorhandensein eines Fahrzeuginsassen auf dem Kraftfahrzeugsitz zuverlässig erkannt wird.

Unter einem weiteren Aspekt der vorliegenden Erfindung ist es eine Aufgabe ein Verfahren zur Herstellung eines Schaumteils eines Kraftfahrzeugsitzes mit Sitzbelegungserkennung derart weiterzubilden, dass das Schaumteil kostengünstig und einfach herstellbar ist.

Diese Aufgabe wird durch ein Schaumteil gemäß Patentanspruch 1 und durch ein Verfahren gemäß Patentanspruch 6 gelöst.

Durch das erfindungsgemäße Schaumteil wird ein definierter Abstand des Sitzbelegungserkennungs-Sensors zur Schaumoberfläche erreicht. Die Schaumoberfläche ist dabei die der Sitzfläche zugewandte Seite des Kraftfahrzeugsitzes. Die der Schaumoberfläche gegenüberliegende Seite wird nachfolgend als Unterseite bezeichnet. Im Bereich der Unterseite bzw. in entsprechenden Ausnehmungen des Schaumteils sind eine Anzahl Sitzbelegungserkennungs-Sensoren angeordnet.

Ein weiterer Vorteil des erfindungsgemäßen Schaumteils mit Sitzbelegungserkennung besteht darin, dass Bauteiltoleranzen bei dem Zusammenbau des Kraftfahrzeugsitzes ausgeglichen werden. Der Kraftfahrzeugsitz umfasst dabei zumindest ein Schaumteil mit einem Drahtrahmen, einen karosseriefest angebundenen Strukturrahmen und eine Anzahl Sitzbelegungserkennungs-Sensoren (nachfolgend Sensoren genannt).

Das erfindungsgemäße Verfahren zeichnet sich dadurch aus, dass durch einfache Verfahrensschritte ein Schaumteil eines Kraftfahrzeugsitzes mit Sitzbelegungserkennung herstellbar ist. Die Halteelemente für die Anzahl Sensoren können beim Schäumen des Schaumteils mit eingeschäumt werden. Alternativ können die Halteelemente an dem Schaumteil auch angeklebt werden.

### Beschreibung der Erfindung

Die Erfindung wird nachfolgend beispielhaft unter Bezugnahme auf die beigefügten Zeichnungen beschrieben.

Es zeigen:
- Figur 1: eine perspektivische dreidimensionale Ansicht eines durchsichtigen Sitz-polsters mit Sitzbelegungserkennungs-Sensoren,
- Figur 2: eine Detailansicht auf die Unterseite des Sitzpolsters mit Sitzbelegungserkennungs-Sensor; und
- Figur 3: die Detailansicht gemäß Figur 2 in einer perspektivischen Darstellung.

Grundsätzlich umfasst ein Kraftfahrzeugsitz als Komponenten einen Strukturrahmen zum Halten des Kraftfahrzeugsitzes und karosserieseitigen Befestigen, ein Schaumteil oder Schaumpolster zum Abdecken des Strukturrahmens und ein Bezugsstoff zum Verkleiden des Schaumteils. Bei einem Kraftfahrzeugsitz mit Sitzbelegungserkennung sind des Weiteren in Abhängigkeit der Anzahl Sitzplätze Sensoren im Bereich der Unterseite d.h. der der Sitzfläche abgewandten Seite des Kraftfahrzeugsitzes angeordnet.

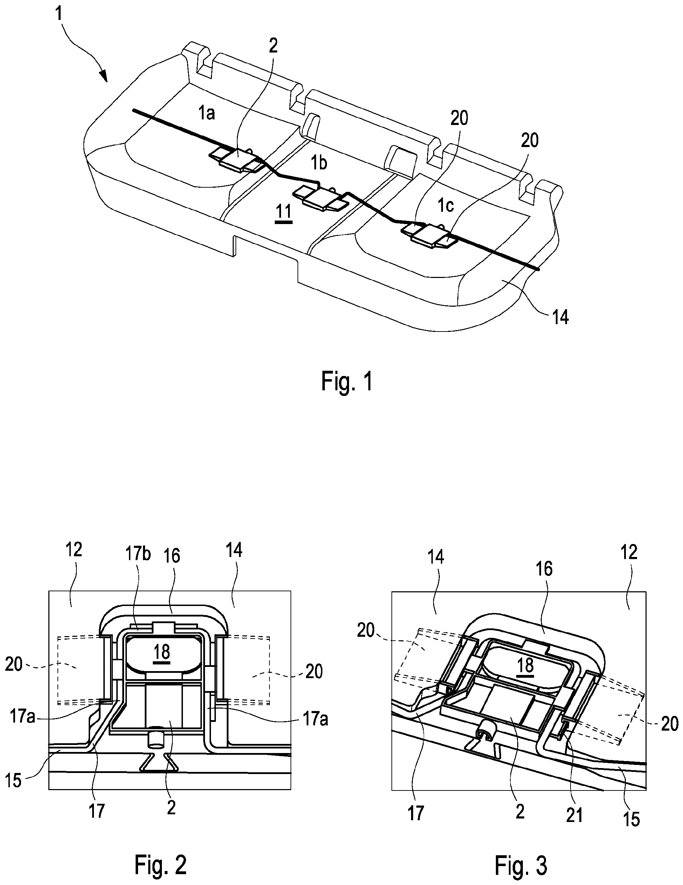

In der Figur 1 ist in einer perspektivischen dreidimensionalen Ansicht ein durchsichtiges Sitzpolster 1 eines Fahrzeugrücksitzes mit drei Sitzplätzen 1a, 1b, 1c sowie den Sitzplätzen zugeordneten Sensoren 2 dargestellt. Das Sitzpolster 1 weist dabei eine Sitzfläche 11 sowie eine der Sitzfläche 11 gegenüberliegende Unterseite 12 auf. Das Sitzpolster 1 umfasst üblicherweise ein mit einem Bezugstoff bezogenes Schaumteil oder Schaumpolster 14, mit einem Drahtrahmen 15 auf. Das Schaumteil 14 besteht vorzugsweise aus Polyurethan oder einem anderen flexiblen Schaum und kann auf den Drahtrahmen 15 gegossen oder anderweitig an diesem befestigt sein. Über den Drahtrahmen 15 erfolgt die Anbindung an den karosseriefesten Strukturrahmen, der zeichnerisch nicht dargestellt ist. Auch der Drahtrahmen 15 ist nicht vollständig gezeichnet, sondern nur im Bereich der die Sensoren 2 als Querstrebe eingezeichnet. Der Aufbau eines Kraftfahrzeugsitzes bzw. einer Sitzanordnung für die 2. Reihe eines Kraftfahrzeugs ist bekannt und wird nicht näher erläutert.

Die Figuren 2 und 3 zeigen in einer Ausführungsform die Anordnung und Festlegung eines Sensors 2 im Bereich einer Ausnehmung 16 an der Unterseite 12 des Schaumteils 14. Es ist zu erkennen, dass ein Drahtabschnitt 17 des Drahtrahmens 15 als u-förmig gebogener Abschnitt randseitig in der Ausnehmung 16 liegt. Hierbei umfasst der Drahtabschnitt 17 zwei seitliche Abschnitte 17a sowie einen die seitlichen Abschnitte verbindenden Verbindungsabschnitt 17b.

Wie es aus den Zeichnungen zu erkennen ist, ist der Sensor über Halteprofile 20 gehalten. Die Halteprofile sind dabei auf gegenüberliegenden Seiten der Ausnehmung 16 in das Schaumteil eingeschäumt und erstrecken sich im Wesentlichen parallel zu der Sitzfläche. Die Halteprofile 20 sind vorzugsweise aus einem Kunststoffmaterial. Der Sensor umfasst vorzugsweise eine Halteplatte 18 und ist an dieser festgelegt und ist in der Ausnehmung zwischen dem Drahtabschnitt 17 aufgenommen. Die Halteprofile 20 weisen eine randseitige Nut auf, in die die Halteplatte 18 über randseitige Führungen 21 eingeschoben werden kann. Es können selbstverständlich auch andere Verbindungen zwischen Halteprofile 20 und Halteplatte 18 vorgesehen werden.

Der Sensor 2 ist weiterhin über die Halteplatte 18 an dem Drahtabschnitt 17 festgelegt, vorzugsweise dort an den seitlichen Abschnitten 17a sowie dem Verbindungsabschnitt 17b verclipst. Als Sensor wird ein Drucksensor mit einem Druckschalter eingesetzt.

In einer nicht dargestellten Ausführungsform des Schaumteils 14 wird der Sensor nur über die eingeschäumten Halteprofile 20 festgelegt gehalten. Dabei kann die Anzahl der Halteprofile 20 und deren Ausgestaltung variabel sein.

## Patentansprüche

1. Schaumteil (14) eines Kraftfahrzeugsitzes mit Sitzbelegungserkennung, wobei das Schaumteil (14) eine Sitzfläche (11) und eine der Sitzfläche gegenüberliegende Unterseite (12) umfasst, und wobei im Bereich der Unterseite (12) eine Anzahl Sitzbelegungserkennungs-Sensoren (2) angeordnet sind zur Erfassung einer auf die Sitzfläche (11) einwirkenden Gewichtskraft,
**dadurch gekennzeichnet, dass** die Sitzbelegungserkennungs-Sensoren (2) über eine Anzahl Halteprofile (20) an dem Schaumteil (14) befestigt sind.

2. Schaumteil (14) nach Anspruch 1, wobei die Anzahl Halteprofile (20) in das Schaumteil (14) eingeschäumt sind.

3. Schaumteil (14) nach Anspruch 1 oder 2, wobei die Anzahl Sitzbelegungserkennungs-Sensoren (2) sich auf einer Halteplatte (18) abstützen, vorzugsweise befestigt sind.

4. Schaumteil (14) nach einem der vorangehenden Ansprüche, wobei das Schaumteil (14) des Weiteren einen Drahtrahmen (15) umfasst und an diesem gehalten ist.

5. Schaumteil (14) nach Anspruch 4, wobei die Anzahl Sitzbelegungserkennungs-Sensoren (2) über die Halteplatte (18) an einem Drahtabschnitt des Drahtrahmens (15) gehalten sind.

6. Verfahren zur Herstellung eines Schaumteils (14) nach einem der Ansprüche 1-5, mit den Schritten,
a. Bereitstellen einer Schäumform zum Herstellen des Schaumteils (14)
b. Bereitstellen einer Anzahl Halteprofile (20)
c. Einlegen der Anzahl Halteprofile (20) in die Schäumform im Bereich der Position der anzuordnenden Anzahl Sitzbelegungserkennungs-Sensoren (2)
d. Schäumen des Schaumteils (14) in der Schäumform und Einschäumen der Halteprofile (20)
e. Herausnehmen des Schaumteils (14) aus der Schäumform.

7. Verfahren nach Anspruch 6 mit dem zusätzlichen Schritt f) Einlegen eines Drahtrahmens (15) in die Schäumform und Umschäumen des Drahtrahmens (15).

8. Verfahren nach Anspruch 7 mit dem Schritt g) Bereitstellen einer Anzahl Sitzbelegungserkennungs-Sensoren (2) und Festlegen der Sensoren (2) an den Halteprofilen (20).

9. Verfahren nach Anspruch 8 mit dem Schritt h) zusätzliches Festlegen der Sensoren (2) an dem Drahtrahmen (15).

10. Kraftfahrzeugsitz mit Sitzpolster (1), das ein Schaumteil (14) nach einem der Ansprüche 1-5 umfasst, wobei der Kraftfahrzeugsitz vorzugsweise ein Rücksitz ist, der weiterhin einen karosseriefest angebundenen Strukturrahmen umfasst, und wobei das Schaumteil (14) über den Drahtrahmen (15) an dem Strukturrahmen angebunden ist und die Anzahl Sitzbelegungserkennungs-Sensoren (2) auf der Unterseite des Sitzpolsters (1) angeordnet sind.

## Claims

1. Foam part (14) of a motor vehicle seat having seat occupancy detection, wherein the foam part (14) comprises a seat surface (11) and an underside (12) opposite to the seat surface, and wherein a number of seat occupancy detection sensors (2) are arranged in the region of the underside (12) for detecting a weight force acting on the seat surface (11), **characterised in that** the seat occupancy detection sensors (2) are fastened on the foam part (14) by means of a number of retaining profiles (20).

2. Foam part (14) according to claim 1, wherein the number of retaining profiles (20) are embedded into the foam part (14).

3. Foam part (14) according to claim 1 or 2, wherein the number of seat occupancy detection sensors (2) are supported on a retaining plate (18), preferably being fastened.

4. Foam part (14) according to any of the preceding claims, wherein the foam part (14) further comprises a wire frame (15) and is retained thereon.

5. Foam part (14) according to claim 4, wherein the number of seat occupancy detection sensors (2) are held via the retaining plate (18) on a wire section of the wire frame (15).

6. Method for the production of a foam part (14) according to any one of claims 1-5, comprising the steps,
a) providing a foam mould for producing the foam part (14)
b) providing a number of retaining profiles (20)
c) inserting the number of retaining profiles (20) into the foam mould in the region of the position of the number of seat occupancy detection sensors (2) that are to be arranged
d) foaming the foam part (14) in the foam mould and embedding the holding profiles (20)
e) removing the foam part (14) from the foam mould.

7. Method according to claim 6, comprising the additional step f) introducing a wire frame (15) into the foam mould and covering the wire frame (15) with foam.

8. Method according to claim 7, comprising the step g) providing a number of seat occupancy detection sensors (2) and fixing the sensors (2) to the retaining profiles (20).

9. Method according to claim 8, comprising the step h) additionally fixing the sensors (2) to the wire frame (15).

10. Motor vehicle seat with seat cushion (1) comprising a foam part (14) according to any one of claims 1-5, wherein the motor vehicle seat is preferably a rear seat further comprising a structural frame attached to the bodywork, and wherein the foam part (14) is attached to the structural frame via the wire frame (15) and the number of seat occupancy detection sensors (2) are arranged on the underside of the seat cushion (1).

## Revendications

1. Pièce en mousse (14) d'un siège de véhicule automobile avec détection d'occupation de siège, dans laquelle la pièce en mousse (14) comprend une surface d'assise (11) et un côté inférieur (12) opposé à la surface d'assise, et dans laquelle un nombre de capteurs de détection d'occupation de siège (2) sont disposés dans la zone du côté inférieur (12) pour détecter un poids agissant sur la surface d'assise (11), **caractérisée en ce que** les capteurs de détection d'occupation de siège (2) sont fixés à la pièce en mousse (14) par l'intermédiaire d'un nombre de profilés de maintien (20).

2. Pièce en mousse (14) selon la revendication 1, dans laquelle le nombre de profilés de maintien (20) sont moussés dans la pièce en mousse (14).

3. Pièce en mousse (14) selon la revendication 1 ou 2, dans laquelle le nombre de capteurs de détection d'occupation de siège (2) sont soutenus, de préférence fixés, sur une plaque de maintien (18).

4. Pièce en mousse (14) selon l'une quelconque des revendications précédentes, dans laquelle la pièce en mousse (14) comprend en outre un cadre de fil (15) et est maintenue sur celui-ci.

5. Partie de mousse (14) selon la revendication 4, dans laquelle le nombre de capteurs de détection d'occupation de siège (2) sont maintenus sur une section de fil du cadre de fil (15) par l'intermédiaire de la plaque de maintien (18).

6. Procédé de fabrication d'une pièce en mousse (14) selon l'une quelconque des revendications 1-5, avec les étapes
a) de fourniture d'un moule de moussage pour fabriquer la pièce en mousse (14)
b) de fourniture d'un nombre de profilés de maintien (20)
c) d'insertion du nombre de profilés de maintien (20) dans le moule de moussage au niveau de la position du nombre de capteurs de détection d'occupation de siège (2) à disposer
d) de moussage de la pièce en mousse (14) dans le moule de moussage et de moussage dans les profilés de maintien (20)
e) de retrait de la pièce en mousse (14) hors du moule de moussage.

7. Procédé selon la revendication 6 avec l'étape supplémentaire f) d'insertion d'un cadre de fil (15) dans le moule de moussage et de remoussage du cadre de fil (15).

8. Procédé selon la revendication 7 avec l'étape g) de fourniture d'un nombre de capteurs de détection d'occupation de siège (2) et de fixation des capteurs (2) aux profilés de maintien (20).

9. Procédé selon la revendication 8 avec l'étape h) de fixation supplémentaire des capteurs (2) sur le cadre de fil (15).

10. Siège de véhicule automobile avec coussin de siège (1), qui comprend une pièce en mousse (14) selon l'une quelconque des revendications 1-5, dans lequel le siège de véhicule automobile est de préférence un siège arrière, qui comprend en outre un cadre structurel fixé à la carrosserie, et dans lequel la pièce en mousse (14) est liée au cadre structurel par l'intermédiaire du cadre de fil (15) et le nombre de capteurs de détection d'occupation de siège (2) sont disposés sur le côté inférieur du coussin de siège (1).
